(19) Europäisches Patentamt
European Patent Office
Office européen des brevets

(11) **EP 1 153 229 B1**

(12) **EUROPÄISCHE PATENTSCHRIFT**

(45) Veröffentlichungstag und Bekanntmachung des Hinweises auf die Patenterteilung:
**26.06.2002 Patentblatt 2002/26**

(21) Anmeldenummer: **00958242.0**

(22) Anmeldetag: **10.08.2000**

(51) Int Cl.$^7$: **F16H 1/46**

(86) Internationale Anmeldenummer:
**PCT/DE00/02693**

(87) Internationale Veröffentlichungsnummer:
**WO 01/13007 (22.02.2001 Gazette 2001/08)**

(54) **PLANETENZAHNRADGETRIEBE**

PLANETARY TRANSMISSION

TRANSMISSION A ENGRENAGES PLANETAIRES

(84) Benannte Vertragsstaaten:
**DE FR GB IT**

(30) Priorität: **12.08.1999 DE 19938323**
**26.02.2000 DE 10009205**

(43) Veröffentlichungstag der Anmeldung:
**14.11.2001 Patentblatt 2001/46**

(73) Patentinhaber: **Alpha Getriebebau GmbH**
**97999 Igersheim (DE)**

(72) Erfinder: **BAYER, Thomas**
**97999 Igersheim (DE)**

(74) Vertreter: **Patentanwalts-Partnerschaft**
**Rotermund + Pfusch**
**Waiblinger Strasse 11**
**70372 Stuttgart (DE)**

(56) Entgegenhaltungen:
**DE-A- 3 410 866      DE-A- 19 840 968**
**DE-U- 29 514 871      FR-A- 1 249 299**
**GB-A- 627 004      US-A- 4 237 750**

**Beschreibung**

Die Erfindung betrifft ein Planetenzahnradgetriebe nach dem Oberbegriff des einzigen Patentanspruchs.

Ein solches Getriebe ist mit Bezug auf die Alternative, bei der die Hohlräder der ersten und zweiten Stufe fest mit dem Planetenträger der dritten Stufe verbunden sind, aus DE 198 40 968 A1 und mit Bezug auf die Alternative, bei der die Hohlräder der ersten und zweiten Stufe fest mit dem Getriebegehäuse verbunden sind, aus GB 627,004 A bekannt.

Gegenüber dem vorgenannten, gattungsbildenden Stand der Technik beschäftigt sich die Erfindung mit dem Problem, bei einem möglichst geringen Bauvolumen eine hohe Übersetzung mit gleichzeitig großen Drehmomenten und hoher Getriebesteifigkeit erreichen zu können. Dabei soll das Getriebe mit einfachen Mitteln kostengünstig herstellbar sein und einen dauerhaften, verschleißarmen Betrieb bei spielarmer Übertragung gewährleisten.

Dieses Ziel wird erfindungsgemäß durch ein gattungsgemäßes Planetenzahnradgetriebe mit den kennzeichnenden Merkmalen des einzigen Patentanspruchs in einer überraschend guten und einfachen Weise erreicht.

Ein wesentlicher Kern der Erfindung besteht bei der Verwendung von Hohlrädern mit der bei Planetengetrieben aus verschiedenartigen Gründen jeweils üblichen Zähnezahl z = 108 in der Realisierung einer bei Planetengetrieben unüblichen Übersetzung von i = 5,5 in der dritten und damit letzten Abtriebsstufe bei einem gleichzeitigen Einsatz von vier Planetenrädern. Unüblich ist ein derart nicht ganzzahliges Übersetzungsverhältnis, weil grundsätzlich in der Getriebetechnik aus unter anderem Normierungsgründen ausschließlich ganzzahlige Übersetzungsverhältnisse realisiert werden.

Bei der Verwendung von vier Planetenrädern und einer Hohlradzähnezahl von z = 108 kann in überraschender Weise genau mit einem Übersetzungsverhältnis von i = 5,5 eine maximale Drehmomentenübertragung erreicht werden.

Durch die Kombination der Übersetzungsverhältnisse von i = 4 in der zweiten Getriebestufe und i = 5,5 in der dritten Getriebestufe wird die bei Getrieben übliche ganzzahlige Übersetzung insgesamt erreicht.

Bei einem ins Langsame übersetzenden Getriebe ist die Abtriebsgetriebestufe mit dem höchsten Drehmoment belastet, so dass es wichtig ist, gerade diese letzte Stufe zur optimalen Aufnahme eines hohen Drehmomentes auszubilden. Durch die erfindungsgemäß angegebene Auslegung der zweiten und dritten Getriebestufe werden Planetengetriebe mit einer kleinen Baugröße und gleichzeitig zu übertragenden hohen Drehmomenten bei zusätzlich extrem hoher Getriebesteifigkeit in einer überraschend guten Weise geschaffen.

Bei einem erfindungsgemäß dreistufig ausgebildeten Planetengetriebe errechnet sich die Gesamtübersetzung nach der Formel

$$i_{ges} = i_1 \times i_2 \times i_3 - (i_1 \times i_2 - 1).$$

Danach liegt eine maximal erreichbare Übersetzung praktisch bei i = 901.

Ein anschließend noch näher beschriebenes Ausführungsbeispiel ist in der Zeichnung dargestellt.

In dieser zeigen

Fig. 1    eine schematische Darstellung eines dreistufigen Planetenzahnradgetriebes,

Fig. 2    ein gegenüber der Ausführung nach Fig. 1 alternativ ausgebildetes Planetenzahnradgetriebe.

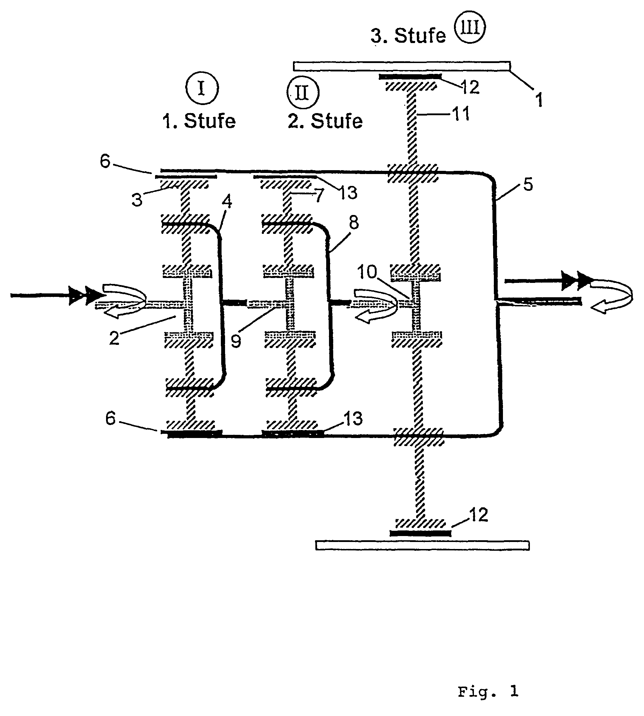

**Beschreibung der Ausführung nach Fig. 1**

Innerhalb eines Getriebegehäuses 1 sind die drehbaren Teile eines dreistufigen Planetenzahnradgetriebes gelagert. Bei dem gezeichneten Ausführungsbeispiel übersetzt das Getriebe von links nach rechts ins Langsame.

Die drei Übersetzungsstufen sind mit I, II und III bezeichnet.

In der ersten Übersetzungsstufe I greift ein von außen antreibbares erstes Sonnenrad 2 in erste Planetenräder 3 ein, die in einem ersten Planetenradträger 4 gelagert sind. Über den Umfang verteilt sind in dem ersten Planetenradträger 4 drei erste Planetenräder 3 gelagert.

Die ersten Planetenräder 3 kämmen in einem mit dem Planetenradträger der dritten Stufe III, der hier als letzter Planetenradträger 5 definiert wird, verdrehfest verbundenen Hohlrad 6. Das Hohlrad 6 und der letzte Planetenradträger 5 drehen wegen ihrer festen Verbindung untereinander drehgeschwindigkeitsgleich. In einem zweiten Hohlrad (13), das in gleicher Weise wie das erste Hohlrad (6) fest mit dem letzten Planetenradträger (5) verbunden ist, kämmen aus der zweiten Getriebestufe II zweite Planetenräder 7, die in einer Anzahl von vier über den Umfang eines in der zweiten Getriebestufe II zugehörigen zweiten Planetenradträger 8 gelagert sind. In der Getriebeachse greift ein fest mit dem ersten Planetenradträger 3 verbundenes zweites Sonnenrad 9 in die zweiten Planetenräder 8 der zweiten Getriebestufe II ein.

Von dem zweiten Planetenradträger 8 aus greift ein fest mit diesem Träger verbundenes letztes Sonnenrad 10 in letzte Planetenräder 11 des letzten Planetenradträgers 5 der dritten Getriebestufe III ein. Über den Umfang verteilt befinden sich in diesem letzten Planetenradträger 5 vier letzte Planetenräder 11.

Der letzte Planetenradträger 5 bildet bei einem ins Langsame übersetzenden Getriebe die Abtriebswelle.

Die beiden ersten Getriebestufen I,II wirken funktionell als in Reihe geschaltet.

Mit dem beschriebenen Getriebe kann beispielsweise eine Übersetzung von i = 181 erreicht werden, wenn in den Hohlrädern, in denen die Planetenräder kämmen, jeweils eine Zähnezahl von 108 vorliegt, als Übersetzung in den einzelnen Stufen vorliegen $i_1$ = 10, $i_2$ = 4 und $i_3$ = 5,5 und in der letzten, das heißt hier dritten Getriebestufe (III) umfangsmäßig vier Planetenräder eingebaut sind bei jeweils nur drei Planetenrädern in den beiden ersten Getriebestufen.

Bei einem volumenmäßig gegenüber dem aus EP 0 824 640 B1 bekannten, lediglich geringfügig größeren erfindungsgemäßen Getriebe kann eine Steigerung bei dem zu übertragenen Drehmoment von mehr als 50 % erreicht werden. In gleicher Weise ist eine etwa 50-%ige Steifigkeiterhöhung möglich. Diese Steigerungen ergeben sich außer der zusätzlichen Getriebestufe insbesondere aus einer Verwendung von jeweils vier Planetenrädern in den beiden Abtriebsstufen II,III sowie durch die Wahl eines Übersetzungsverhältnisses von i = 5,5 in dem mit jeweils vier Planetenrädern bestückten Getriebestufen II,III.

Selbstverständlich kann auch die erste Getriebestufe I mit über den Umfang verteilt angeordneten vier Planetenrädern ausgebildet sein.

Wie bei dem bekannten Getriebe nach EP 0 824 640 B1 soll auch hier der abtreibende Planetenradträger beidseitig der von diesem getragenen Planetenräder innerhalb des Getriebegehäuses 1 wälzgelagert sein, und zwar axial fixiert.

Die einzelnen Planetenräder sind in den Planetenradträgern in an sich üblicher Weise möglichst reibungsarm gelagert.

Für eine Übertragung hoher Momente ist das erfindungsgemäße, dreistufige Getriebe wie folgt ausgelegt:

- Alle Hohlräder besitzen eine Zähnezahl von z = 108.
- In der dritten Getriebestufe sind in dem Planetenradträger umfangsmäßig verteilt vier Planetenräder vorgesehen und als Übersetzung ist festgelegt $i_3$ = 5,5.
- In der zweiten Getriebestufe sind in dem Planetenradträger umfangsmäßig verteilt alternativ entweder vier oder drei Planetenräder vorgesehen und als Übersetzung für diese Stufe ist festgelegt $i_2$ = 4 oder $i_2$ = 5,5.
- In der ersten Getriebestufe sind in dem Planetenradträger umfangsmäßig verteilt drei Planetenräder vorgesehen und als Übersetzungen sind für diese Stufe festlegbar $i_1$ = 3,4,5,7,10.

Bei einer Hohlradzähnezahl von z = 108 können überraschenderweise bei einer vorgegebenen Übersetzung von i = 5,5 vier Planetenräder umfangsmäßig in einem zugehörigen Planetenradträger eingesetzt werden. Trotz dieses ungeraden Einzelstufen-Übersetzungsverhältnisses läßt sich durch eine erfindungsgemäße Kinematik dennoch eine gerade Gesamtübersetzung erhalten.

Ein besonderer Vorteil besteht darin, daß durch die erfindungsgemäße Getriebekinematik und mögliche Einzel- bzw. Gesamtübersetzungen bei einem beispielsweise dreistufigen Getriebe eine gleichmäßige Sicherheit der Verzahnungen erreichbar ist, wodurch wiederum hohe übertragbare Momente bei gleichzeitig geringem Verschleiß möglich sind.

Von den schnelllaufenden und damit an sich geräuschintensiven beiden ersten Getriebestufen geht nach außerhalb des Getriebegehäuses nur eine geringe, äußerst gedämpfte Geräuschemission aus. Dies liegt daran, daß die rotierenden Teile der beiden ersten Getriebestufen nicht direkt mit dem ortsfesten Getriebe verbunden sind und somit von ihnen ausgehender Körperschall nur über lange Wege mit Trennfugen weitergeleitet wird, was praktisch einer Geräuschkapselung entspricht.

Bei einer Zähnezahl für die Hohlräder von z = 108 und Übersetzungen von jeweils maximal i = 10 in allen drei Getriebestufen sowie jeweils drei umfangsmäßig verteilten Planetenrädern je Getriebestufe ist nach der weiter oben angegebenen Formel eine Maximalübersetzung von i = 901 erreichbar.

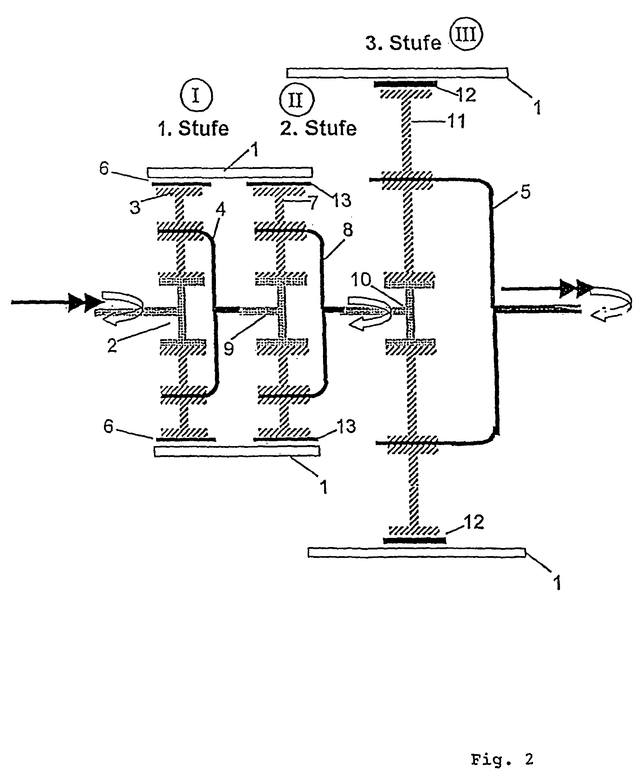

### Beschreibung der Ausführung nach Fig. 2

Der Unterschied der Ausführung nach Fig. 2 gegenüber derjenigen nach Fig. 1 besteht darin, daß die ersten und zweiten Hohlräder (6, 13) nicht fest mit dem letzten Planetenradträger (5), sondern mit dem Getriebegehäuse (1) verbunden sind.

### Patentansprüche

1. Dreistufiges, ins Langsame übersetzendes Planetenzahnradgetriebe mit in jeder Stufe einem angetriebenen, mit in einem Hohlrad abwälzenden und in einem Planetenradträger gelagerten Planetenrädern zusammenwirkenden Sonnenrad, bei dem die Sonnenräder der zweiten und dritten Stufe jeweils von dem Planetenradträger der vorangegangenen Stufe angetrieben werden, und einem ortsfesten Getriebegehäuse, bei dem zumindest das Hohlrad der dritten Stufe mit dem Getriebegehäuse fest verbunden ist und die Hohlräder der ersten und zweiten Stufe jeweils fest entweder mit dem Planetenträger der dritten Stufe oder dem Getriebegehäuse verbunden sind und bei dem ferner die Planetenradträger der zweiten und dritten Stufe mit in Umfangsrichtung jeweils vier Planetenrädern versehen sind,
   **gekennzeichnet durch die Merkmale**

- die Zähnezahl der Hohlräder (6, 12, 13) beträgt in allen drei Stufen jeweils z = 108,
- die Übersetzungsverhältnisse betragen für die zweite Stufe i = 4 und die dritte Stufe i = 5,5.

## Claims

1. Three stage, speed-reducing planetary transmission having, in each stage, a driven sun wheel rolling in an internal gear and interacting with a planet wheel mounted in a planet carrier, in which the sun wheels of the second and third stages are each driven by the planet carrier of the preceding stage, and a fixed transmission housing, in which at least the internal gear of the third stage is rigidly connected with the transmission housing and the internal gears of the first and second stages are each rigidly connected either with the planet carrier of the third stage or the transmission housing, and in which, furthermore, the planet carriers of the second and third stages are each provided with four planet wheels across their width, **characterized by** the features

   - the internal gears (6, 12, 13) <u>each</u> have a number of teeth z = 108 in all three stages,

   - the transmission ratios are i = 4 for the second stage and i = 5.5 for the third stage.

## Revendications

1. Train planétaire démultiplicateur à trois étages, comprenant à chaque étage une roue solaire entraînée, qui concourt avec des roues satellites tournant dans une couronne à denture intérieure et montées dans un porte-satellites, train sur lequel les roues solaires du deuxième et du troisième étage sont à chaque fois entraînées par le porte-satellites de l'étage précédent, et comprenant une boîte de vitesses stationnaire, sur laquelle au moins la couronne à denture intérieure du troisième étage est assemblée fixement avec la boîte de vitesses et les couronnes à denture intérieure du premier et du deuxième étage sont à chaque fois assemblées fixement avec le porte-satellites du troisième étage ou avec la boîte de vitesses, et sur laquelle les porte-satellites du deuxième et du troisième étage sont à chaque fois munis de quatre roues satellites dans le sens périphérique, **caractérisé par** les caractéristiques :

   - le nombre de dents des couronnes à denture intérieure (6, 12, 13) est respectivement égal dans tous les étages à chaque fois à z = 108,
   - les rapports d'engrenage sont de i = 4 pour le deuxième étage et de i = 5,5 pour le troisième étage.

3. Stufe Ⓘ̱ⓘ̱ⓘ̱

Ⓘ

1. Stufe

Ⓘ̱ⓘ̱

2. Stufe

6

3

4

2

9

7

13

8

10

11

12

1

5

6

13

12

Fig. 1

3. Stufe (III)

(I)

1. Stufe

(II)

2. Stufe

Fig. 2